# EUROPEAN PATENT APPLICATION

(11) **EP 2 374 351 A1**
(43) Date of publication of application: **12.10.2011**
(21) Application number: 10159500.7
(22) Date of filing: 09.04.2010
(51) Int. Cl.: A01K 41/00, A01K 41/02, A01K 41/04, A01K 45/00

(54) **Eggshell disinfectant system**

(71) Applicant: Abramov, Erez, 45870 Moshav Chagor (IL)
(72) Inventor: Abramov, Erez, 45870 Moshav Chagor (IL)
(74) Representative: Sarpi, Maurizio

(57) **Abstract**

This invention is a ne w disinfecting and immunizing system for fertilized and unfertilized avian eggs that, by manipulating the ambient air pressure, creates an environment that causes the pores of the eggshells to open, allowing disinfectants and inoculants to be delivered to the eggs in such a manner that the liquid material penetrates through the pores into the shell to a specified depth but does not go beyond the shell to the embryo. The system is designed such that it performs similar but separate processes for disinfection and immunization; each process includes changing the air pressure, spraying appropriate product, and returning the air pressure to initial condition.

## Description

### FIELD OF INVENTION

This invention relates to a system that disinfects and/or inoculates eggs to a pre - specified depth within the shell without weakening the shell or damaging the embryo. This action is achieved by manipulatin g the ambient air pressure surrounding the eggs in order to cause the pores on the eggshells to open, creating a condition conducive to the absorption of the disinfectants and inoculants through the pores of the eggshells.

The system will treat any avian eggs, unfertilized or fertilized, and at any stage of the incubation and storage periods.

### BACKGROUND OF THE INVENTION

The protective outer shells of avian eggs are covered with thousands of tiny pores thru which oxygen and other gases are exchanged. Also o n the shells and throughout the pores of eggs are any number of contaminants and detrimental organisms. Although the avian eggshell is only about .04mm thick, numerous impurities are found at every different depth of the shell. In fertilized eggs, these impurities can adversely effect optimal growth of the embryo. In eggs that are processed for consumption, this can result in contaminated food product.

Current art allows for providing enriched oxygen to be forced into viable eggs, encouraging rapid growth and stronger, more disease resistant hatchlings. This also reduces some of the need for vaccinating newly hatched chicks. However, there currently exists no way to eliminate the contaminants and diseases that exist at shell level and within the shell itself. The contaminants contained therein can easily be passed through the shell and directly to the embryos, negatively effecting growth, healthiness, and quality of the eggs and hatchlings.

By facilitating the absorption of inoculants and disinfectants sprayed onto the shells of fertilized and non -fertilized avian eggs at any phase of the incubation and storage periods, the current invention can eliminate diseases and other contaminants that exist in and on the eggshells, thereby preventing the diseases and contaminants from ever reaching the embryo.

### SUMMARY OF INVENTION

The current invention proposes a disinfecting and immunization system that exploits the eggs' innate need to balance the internal egg pressure with the ambient air pressure, a process that causes the pores on the eggshells to open or close, depending on the ambient air. By precisely controlling the external environment, including air pressure, humidity, and temperature, the proposed system is able to control the opening and closing of th e pores. In this way, the system controls the rate at which any product on the surface of the eggshell is absorbed and the depth to which the product reaches.

The processes for disinfecting and immunizing are similar and each process requires the creation and maintenance of a precisely controlled atmosphere. The actions required are the same for each process but occur in different orders. For both, the first step is to create an initial atmosphere and determine the process type.

Then, for disinfection, the air is pressurized so that the pores of the eggshells open, allowing the eggshells to absorb the disinfecting product. Next, the eggs are sprayed with the disinfecting material. After the prescribed time, the eggs are dried. Finally, the air is ret urned to its initial condition so that the pores close, and the air temperature may be cooled.

The immunization process is similar to the disinfection process, with a change in the order of the steps. The eggs are first sprayed with inoculant and then the air pressure is changed. After a predetermined period, the air is returned to its initial condition. The eggs are dried and the air may be cooled.

By controlling the ambient environment, the system is able to create conditions whereby the depth of produ ct penetration can be scientifically controlled for maximum effectiveness and minimum harm to the shell and embryo. The system is designed such that the disinfecting or inoculating products will not penetrate deeper than the shell and allows the operator to target specific contaminants residing at specific depths in the eggshell.

The disinfectant or vaccination is sprayed onto the eggs using the finest possible spray. Due to the small size of the spray, the least amount of product is used. Additionally, the drying time is kept to a minimum, reducing the total run time of each session. In this way, both resources and time are saved which in turn saves money.

### BRIEF DESCRIPTION OF DRAWINGS

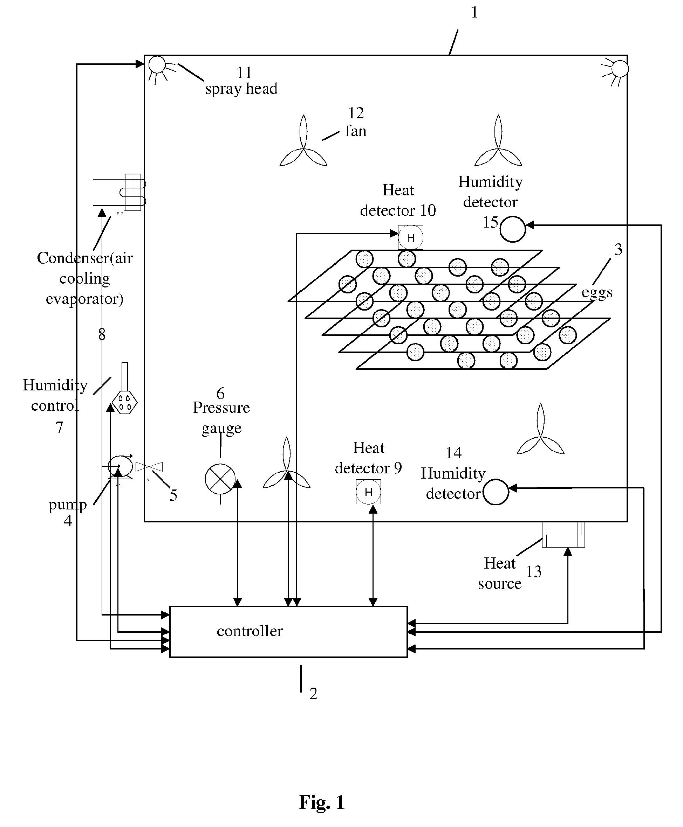

These and further features and advantages of the invention will become more clearly understood in the light of the ensuing description of a preferred embodiment thereof, given by way of example only, with reference to the accompanying drawings, wherein-
- Figure 1:: Shows all of the components of the invention in one possible configuration.

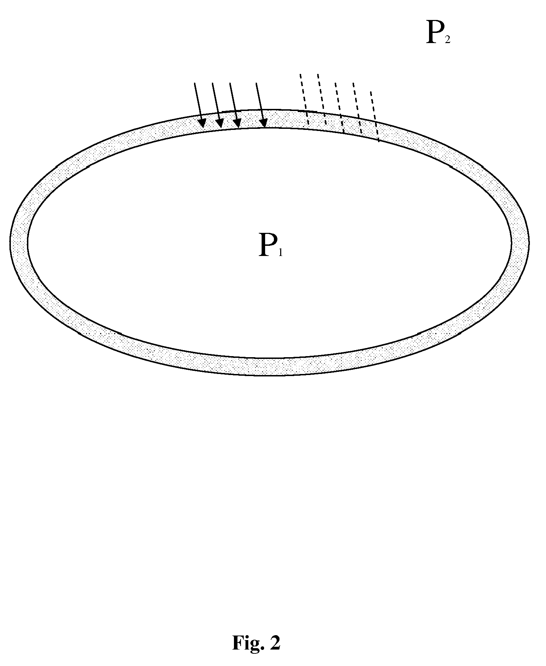

- Figure 2:: Shows penetration of the sprayed product into the predetermined depth of the eggshell, where P1 is the constant pressure on the embryo within the shell and P2 is controllable ambient air pressure. Depth of penetration is achieved by maintaining P2 at a specific level.
- Figure 3:: Is a flowchart showing the sequence of required actions to be taken during either a disinfecting or an immunization session.

### DESCRIPTION OF THE PREFERRED EMBODIMENT

The system is comprised of a sealed space (room), a computerized control board, the equipment that maintains the air pressure within the sealed room at the required levels of operation and the devices required to distribute the disinfectant or inoculant.

The sealed room (1) is of a size and shape that will accommodate the required number of eggs (3). The construction of the room is consistent with the requirements of transporting eggs in and out of the room and is completely sealed to ensure a clean environment in which the pressure, humidity, and temperature of the ambient air can be completely controlled.

Every component of the Eggshell Disinfectant System is connected directly to the computerized control board (2), which is situated outside of the sealed room. From the control board, an operator is able to monitor the system components and input the data required to run each session. In order to continuously maintain exact conditions at all times, the control board constantly receives data from all of the various monitoring devices and O ther system components and automatically makes the required adjustments to the components accordingly.

The air pump (4) supplies fresh air or removes ambient air as needed through an air valve (5) in order to maintain proper air pressure in the sealed room . Construction of the air pump and valve are standard to the art; the size and power of the pump and valve are determined by the size of the room. A pressure gauge (6) continuously monitors the pressure of the ambient air. The system requires at least O ne pressure gauge, however there is the option of adding one or more additional gauges (e.g., in the vicinity of the eggs).

The humidity controller (7) ensures that proper humidity is maintained in the ambient air, aiding in maintaining proper air pressure. Its construction is standard to the art; the size and power is determined by the size of the room.

A standard air-cooling evaporative condenser (8) is used to help maintain the proper temperature and humidity in the ambient air. This condenser is cons tructed such that it quickly warms and cools the ambient air. The condenser may have multiple entry-exit ports in order to heat and cool the room evenly. The size of the condenser and the number and location of the entry-exit ports are determined by the size and the shape of the room.

There are two temperature detectors and at least one humidity detector. The ambient air temperature detector (9) is used to detect and monitor the temperature of the ambient air. The second temperature detector, the egg temperature detector (10), is used to detect and monitor the temperature of the eggs. The ambient air humidity detector (14) detects and monitors the humidity levels of the ambient air. An optional egg humidity detector (15) can be placed on the eggs to mo re precisely monitor the humidity levels of the eggs. The number of eggs and the size of the room determine the placement and number of required heat and humidity detectors. The system requires a minimum of one spray head (11) to deliver the desired 1 iquid product onto the eggshells. The disinfecting or inoculating product is sprayed in the finest possible spray over the eggs. The number of eggs and the size of the room will determine how many spray heads are required and their specific placement within the sealed room. The fineness size of the spray is determined by the type of product that is being used. Any type of container is connected to the spray heads using standard connections that maintain the required sealed and clean environment.

Distribution fans (12) are used to evenly distribute the disinfectant or inoculants onto the eggshells. In order ensure that the disinfectant is evenly distributed, there needs to be a minimum of one fan. The fan also assists in maintaining the proper ambient air temperature and in drying the eggs at the end of each session. The placement of the fan and the speed at which it revolves is determined by the size and shape of the room, the number of eggs that the room can process, and the ambient temperature. There may also be additional fans, depending on the size of the room and the number of eggs. The system uses standard fans made of any suitable material. There is the option of adding a heat source (13), as required, in order to assist in maintaining proper ambient air pressure and temperature.

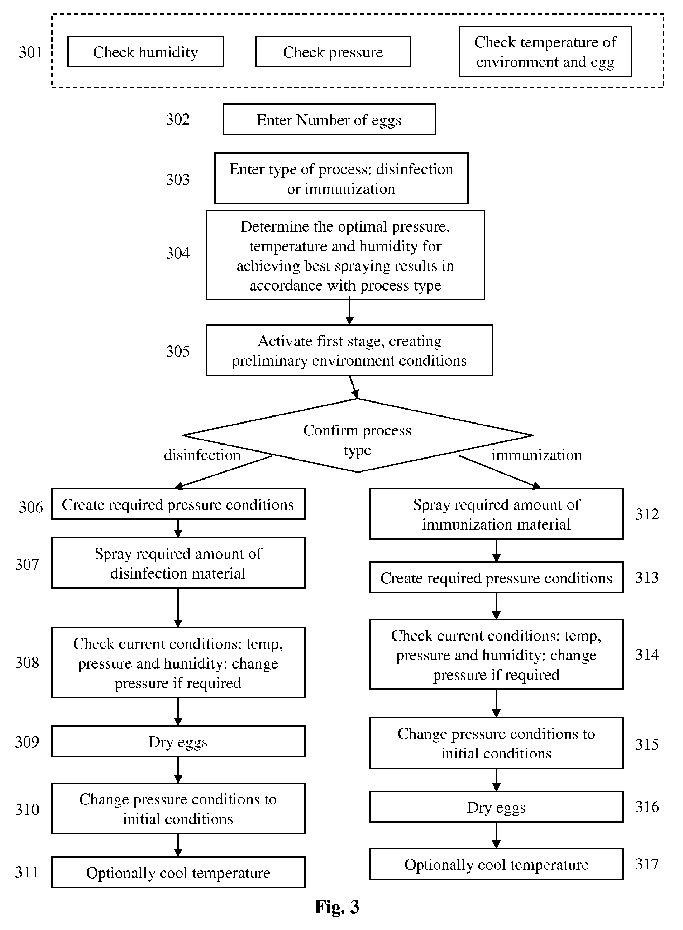

The disinfecting and inoculating processes are illustrated in Fig. 3.

Each process is treated differently. The typical disinfecting session of the system occurs in multiple stages, as described below. Throughout al 1 stages of the disinfecting and inoculating processes, the operator can monitor the data collected by the computer.

After the eggs are brought into the room, the room is sealed and the operator initiates the first stage of the disinfecting or inoculation session. The control board retrieves all of the data regarding the current ambient air status within the sealed room (step 301). Then the operator enters the necessary session variables including the number of eggs requiring treatment and the type of p rocess (disinfectant or inoculation) to be used for the current session (steps 302, 303). Loaded with all of the necessary data, the computer is equipped to determine the optimal settings required for all of the system components in order to achieve maxim al results and will make all required adjustments (step 304). At this point, all of the required system components are activated, bringing the ambient air to the preliminary required temperature and humidity (step 305).

At this point in the session, the procedures differ for each kind treatment.

The procedure for the disinfection process is as follows: Once the control board brings the preliminary ambient air to the required levels, the ambient air pressure is adjusted by controlling the ambient air tempe rature and humidity as well as using the air pump (step 306). By changing the ambient air pressure, a pressure differential (partial vacuum condition) is created between the eggs' internal pressure and the ambient air pressure, thus the disinfection mater ial is penetrating through the egg shell. A side affect of this process cause the eggs pores to open.

In the next stage, the liquid disinfectant is sprayed to coat the eggs (step 307). The amount of product sprayed is determined and controlled by the control board.

The computerized control board maintains the correct environment, and particularly the pressure condition required to absorb the disinfectant. This specific air pressure is maintained for as long as required for the eggshells to absorb the pr oduct in the correct quantities and to the correct depth (step 308).

Last is the drying stage. At this stage, the fans are utilized to dry the eggs of the remaining disinfectant (step 309). After the drying process, the air pressure is returned to a pre liminary pressure condition, thereby ending product absorption (step 310).Optionally, in accordance with treatment requirements the eggs are cooled by the air-conditioner (step 311).

Once the last stage of the disinfecting process is complete, the eggs a re returned to their storage or incubation site. The system is reset and the process can begin again. The procedure for the inoculation process includes the same steps but in a different order: first, the inoculant material is sprayed (step 312), then the required pressure conditions created (313). For this procedure, the created inner pressure within the egg is higher than the ambient air pressure. The pressure condition is maintained for a controlled period of time (step 314). At the end of this period , the pressure is returned to its preliminary condition (step 315). The last step is drying the eggs (step 316), and optional cooling (317).

The most significant step of these processes is the creation of a pressure differential, which enables the system to control the penetration of the disinfection or inoculant material through the eggshell.

A further embodiment of the present invention suggests the use of an alternative spraying process, enabling a more accurate distribution of the disinfection or inoculant material. According to this embodiment, the spray heads can slide along tracks installed in the sealed room's ceiling. During the spraying process, the spray head movement is controlled, enabling the distribution of defined amounts of material at specific locations.

While the above description contains many specifities, these should not be construed as limitations on the scope of the invention, but rather as exemplifications of the preferred embodiments. Those skilled in the art will envision other possible variations that are within its scope. Accordingly, the scope of the invention should be determined not by the embodiment illustrated, but by the appended claims and their legal equivalents.

### Numbered List for Drawings

- 1.: Sealed Space (Room)
- 2.: Computerized Control Board
- 3.: Eggs Requiring Disinfecting
- 4.: Air Pump
- 5.: Air Valve
- 6.: Pressure Gauge
- 7.: Humidity control
- 8.: Condenser
- 9.: Ambient Air Temperature Detector (heat detector)
- 10.: Egg Temperature Detector (heat detector)
- 11.: Spray Heads
- 12.: Distribution Fans
- 13.: Heat Source
- 14.: Ambient Air Humidity Detector
- 15.: Egg Humidity Detector

## Claims

1. A system for egg disinfection or inoculation within a sealed room by distributing designated disinfection/enrichment material, controlling the conditions of the ambient environment:
- at least one spray head enabling the distribution of the designated material;
- air pump for changing pressure conditions wherein the pressure condition enables the creation of a pressure differential between the egg internal pressure and the ambient environment pressure;
- condenser fo r controlling ambient air temperature and humidity conditions.
- at least one fan for controlling disinfection and immunization material distribution;
- at least one ambient air temperature detector;
- at least one egg temperature detector;
- at least one ambient air humidity detector;
- pressure gauge;
- computerized controller for controlling the operation of the spray, air pump, the condenser and heat source for creating the proper conditions of pressure, temperature and humidity of ambient air wherein the amount of sprayed material and ambient air target conditions are determined in accordance with predetermined setting values and measured values of pressure, temperature, and humidity as detected by the temperature detectors, humidity sensor and pressure gauge.

2. The system of claim 1 wherein the setting values are evaluated according to disinfection or inoculation treatment requirements and initial values of the ambient air condition.

3. The system of claim 1 wherein the ambient air conditions are changed according to defined rules and schedule plan including the followings stages:
applying preliminary conditions within the ambient air, spraying a pre-defined amount of disinfectant or inoculation material, creating differential pressure between the inner egg pressure and ambient air pressure for a controlled time period and changing temperature and humidity for drying the eggshells and
changing the pressure condition to the preliminary condition.

4. The system of claim 3 wherein for the disinfection process, the inner pressure of the egg is lower than the ambient air pressure.

5. The system of claim 3 wherein for the disinfection process the pressure differential is created before spraying the disinfecting material and the drying process is applied before changing the pressure back to its preliminary condition.

6. The system of claim 3 wherein for the immunization process, wherein the inner pressure of the egg is higher than the ambient air pressure.

7. The system of claim 3 wherein for the immunization process, the pressure differential is created after spraying the inoculation material and the drying process is applied after changing the pressure back to its preliminary condition.

8. The system of claim 3 further comprising the stage of cooling the ambient air.

9. The system of claim further comprising a heat source for controlling the ambient air temperature.

10. The system of claim 1 wherein the sprays are installed on sliding tracks enabling the sprays to be moved along the tracks.

11. A method for eggs disinfection or inoculation within a sealed space, said method comprising the steps of:
- Entering number of eggs for treatment;
- Entering type of process;
- Measuring current environmental conditions including temperature, humidity, and pressure;
- Setting preliminary environments conditions in ac cordance with predefined rules based on measured conditions, type of process and number of eggs;
- spraying disinfecting or inoculation material within the seal space;
- changing pressure condition in order to achieve a pressure differential between eggs' internal pressure and environment pressure;
- changing temperature and humidity for drying the eggs;
- changing pressure condition to preliminary setting.

12. The method of claim 11 wherein for disinfection process, the pressure differential is created before spraying the disinfection material and the drying process is applied before changing the pressure back to its preliminary condition.

13. The method of claim 11 wherein for inoculation process, the pressure differential is created after spraying the inoculation material and the drying process is applied after changing the pressure back to its preliminary condition.

14. The method of claim 11 wherein for the disinfection process, the inner pressure of the egg is lower than the ambient air pressure.

15. The method of claim 11 wherein for the immunization process, wherein the inner pressure of the egg is higher than the ambient air pressure.

16. The method of claim 11 further comprising the step of cooling the ambient air.
